# EUROPEAN PATENT APPLICATION

(11) **EP 2 754 602 A2**
(43) Date of publication of application: **16.07.2014**
(21) Application number: 14150667.5
(22) Date of filing: 09.01.2014
(51) Int. Cl.: B62D 9/00

(54) **Autonomous vehicle braking and steering system**

(30) Priority: 09.01.2013 US 201361750548 P
(71) Applicant: Continental Automotive Systems, Inc., Auburn Hills, MI 48326 (US)
(72) Inventor: McClain, Jeremy Jason, Oxford, MI 48371 (US); Weber, Jeffrey William, Royal Oak, MI 48073 (US); Agnew, David Leslie, Clarkston, MI 48348 (US)
(74) Representative: Shanks, Andrew

(57) **Abstract**

A steering system for a vehicle (10) includes a front wheel (12, 14) supported for rotation about a first axis (34) and a pivot axis (36) transverse to the first axis (34) and spaced inboard of a centerline (40) of the front wheel (12, 14). The front wheel (12, 14) is movable about the pivot axis (36) to change direction of the vehicle (10). A brake (26) coupled to the front wheel (12, 14) provides braking rotation of the front wheel (12, 14) and a controller (28) controls operation of the brake (26) to generate a desired braking force in a direction determined to adjust a vehicle direction.

## Description

### TECHNICAL FIELD

The present disclosure relates to automotive vehicles, and more particularly to a steering assist system for a steer-by-wire system for a motor vehicle.

### BACKGROUND

Advancements in vehicle steering systems include the use of electric motors instead of conventional mechanical linkage. Such systems are referred to as steer-by-wire systems and facilitate the development of autonomous vehicles. In a steer-by-wire system electric motors are controlled responsive to input to a steering wheel of from a controller autonomously controlling the direction of the vehicle. A back-up system is provided that operates in the event of a failure to the primary steer-by-wire systems.

One back-up steering system brakes wheels on one side of a vehicle to induce a moment that operates to steer the vehicle. Actuation of brakes on one side of a vehicle induces forces combined with vehicle momentum to change a direction of the vehicle. Such systems can require relatively large braking forces to produce relatively small changes in vehicle direction.

### SUMMARY

A disclosed steering system for a vehicle includes a front wheel supported for rotation about a first axis and a pivot axis transverse to the first axis and spaced inboard of a centerline of the front wheel. The front wheel is movable about the pivot axis to change direction of the vehicle. A brake is coupled to the front wheel for braking rotation of the front wheel and controlled by a controller. The controller controls operation of the brake to generate a desired braking force in a direction determined to adjust a vehicle direction.

An additional disclosed steering system for a motor vehicle includes a front wheel that is rotatable about an axis of rotation and a pivot axis transverse to the axis of rotation. The pivot axis is disposed inboard of a centerline of each of the front wheel and an electric motor is coupled to the front wheel for rotating the front wheel about the pivot axis. A brake is coupled to the front wheel for controlling rotation of the front wheel about the axis of rotation. A controller controls the brake to generate a braking force on the front wheel to generate a change in vehicle direction responsive to the electric motor failing to provide a desired control of the front wheel.

A disclosed method of steering a vehicle includes supporting a front wheel for rotation about a first axis and pivotal movement about a pivot axis transverse to the first axis. The pivot axis is disposed inboard of a centerline of the front wheel. The method further includes generating a braking force on the front wheel to generate a desired first moment force about a center point of the vehicle and a second moment force on the front wheel about the pivot axis.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

The present disclosure will become more fully understood from the detailed description and the accompanying drawings, wherein:
Figure 1 is a schematic illustration of a vehicle including a steer-by-wire system and brake torque vectoring back up steering system.
Figure 2 is a schematic illustration of brake torque vectoring forces on a motor vehicle for steering the vehicle in a first direction.

### DETAILED DESCRIPTION

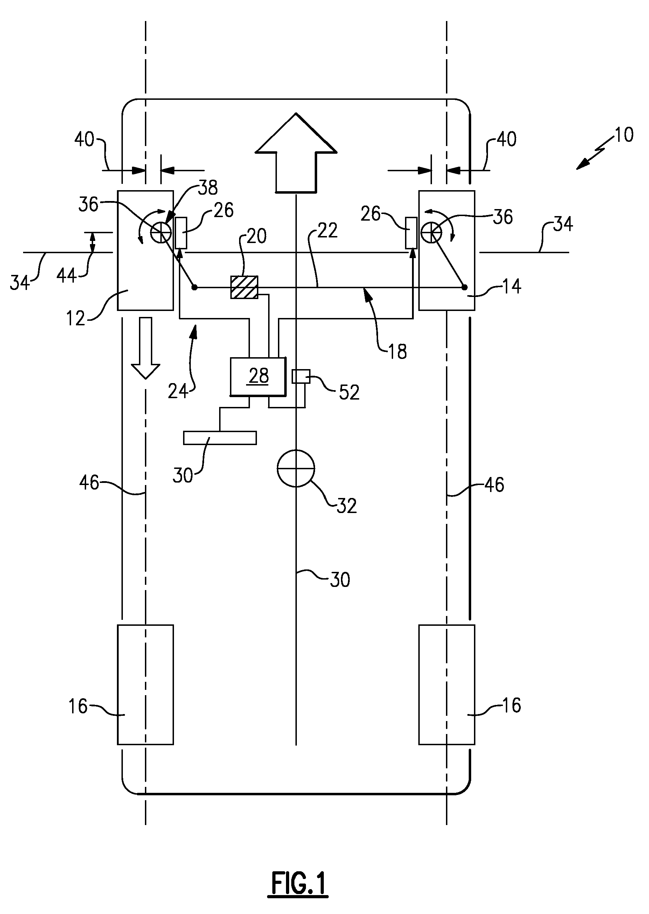

Referring to Figure 1, an example vehicle 10 includes a left front wheel 12, a right front wheel 14, and rear wheels 16. The front wheels 12, 14 rotate about a first rotation axis 34 and supported by pivot 38 for movement about a pivot axis 36 transverse to the first axis. Movement about the pivot axis 36 is controlled by an electric steering system 18. The example electric steering system 18 is known as a steer-by-wire system where an input from a steering wheel 30 is provided to a controller 28. The controller 28 then controls an electric motor 20 that drives linkage 22 coupled to each of the front wheels 12, 14 to steer the vehicle. The steering wheel 30 may also be mechanically coupled to the steering system 18. The example steer-by-wire system 18 enables autonomous operation of the vehicle and it is within the contemplation of this disclosure that the controller 28 is part of an overall vehicle autonomous operation system.

The example steer by wire system 18 includes a steer assist system 24 that utilizes selective actuation of brakes 26 coupled to each of the front wheels 12, 14 to generate moment forces that provide additional steering gain to maneuver the vehicle 10. The controller 28 controls operation of the brakes and may also be configured as a separate additional controller that operates separately from a controller for the steer by wire system 18

The steer assist system utilizes selective braking on one of the left and right front wheels 12, 14 to provide torque steering. The torque steer can supplement current steering and/or provide an alternate steering system should the primary steer-by-wire system 18 fail to perform as desired.

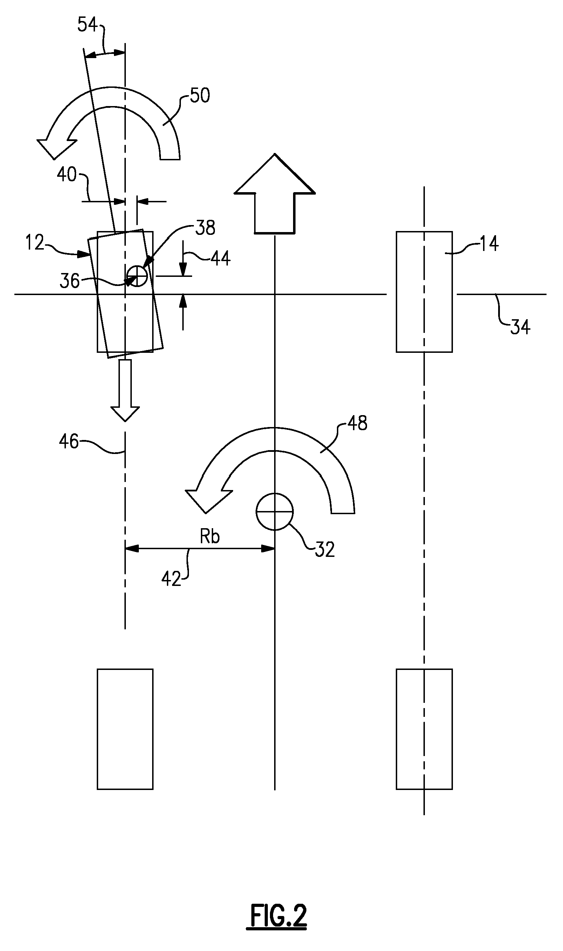

Referring to Figure 2 with continued reference to Figure 1, in this disclosed example, brake torque steer is performed by generating a braking force on one of the front wheels 12, 14 to induce a moment force 48 about a vehicle center point 32 that turns the vehicle 10. Although the disclosed example provides for a braking force on one of the front wheels 12, 14, a corresponding braking force could be exerted on a corresponding rear wheel 16, in addition to one of the front wheels 12, 14 to further provide the desired brake torque steer. The controller 28 receives inputs from a steering wheel 30 and/or sensors schematically shown at 52 that are utilized to control the electric motor 20 and the brakes 26 coupled to each of the corresponding front wheels 12, 14.

In the disclosed embodiment, each of the wheels 12, 14 are disposed and rotatable about the pivot axis 36. The pivot axis 36 is in turn spaced away from a wheel centerline 46. As appreciated, instead of disposing the pivot 36 along the wheel centerline, the pivot axis 36 is spaced apart from the wheel centerline 46 such that application of a braking force to one of the front wheels 12, 14 generates an additional second moment force 50. The second moment force 50 causes the wheel 12 to rotate about the pivot axis 36 to generate a steering angle 54. The steering angle 54 orientates the front wheels 12, 14 to generate additional steering gain to direct the vehicle 10 in a desired direction and facilitate turning of the vehicle 10.

The pivot axis 36 is also disposed vehicle forward of the axis of rotation 34 a distance 44 to further facilitate generation of the moment force 50 about the pivot axis 36 responsive to application of a braking force.

In operation, actuation of one of the brakes 26 generates a braking force on one of the left and right wheels 12, 14. In this example a braking force applied to the front left wheel 12. Braking of the front left wheel 12 generates by the first moment force 48 about the center point 32 of the vehicle. The magnitude of the first moment force 48 is a result of the braking force applied to the front wheel 12 and the distance 42 of the center point 32 from the wheel centerline 46. In this example, the center point of the vehicle 32 is disposed along a vehicle centerline 30 aft of the front wheels. As appreciated, the center point 32 about which the first moment force 48 is generated need not be at the exact physical center of the vehicle 10, but may be located at different points of the vehicle depending on the actual vehicle dynamics of a specific driving condition.

The controller 28 operates the brake 26 coupled to the front left wheel 12 to generate the first moment force 48 and the second moment force 50 that pivots the wheel 12 about the pivot axis 36. In the disclosed example, the pivot 38 is spaced vehicle forward at the distance 44 from the first axis 34 and is spaced inboard the distance 40 from the wheel centerline 46. The pivot axis 36 may also be disposed along the axis of rotation 34. The second moment force 50 is thereby a resultant of braking force and the distance 40 from the wheel centerline 46. The speed of the vehicle may also be considered and affects the curvature of turning radius the vehicle resulting from the generated moment forces. The generated second moment force 50 combined with the first moment force 48 generate the overall torque steering of the vehicle 10. Moreover, because the pivot axis 38 is spaced the distance 40 (also known as a scrub radius) inboard of the wheel centerline 46, the second moment force 50 and the first moment force 48 act in a common direction.

The additional steering gain provided by the second moment force 50 generated around the pivot 36 combined with the first moment force 48 is enabled by spacing the pivot axis 36 about which the left front wheel 12 rotates the distance 40 inboard of the wheel centerline 46. Positioning of the pivot axis 36 inboard of the wheel centerline 46 enables the braking force generated by the brakes 26 at the command of the controller 28 to generate the second moment force 50 in the same direction as the first moment force 48 rather than counter to each other. A pivot axis 36 along the wheel centerline 46 or outboard of the wheel centerline 46 does not generate the desired moment force in a direction that would aid in modifying the steering angle 54. Additionally, counter first and second moment forces reduce the overall steering gains that can reduce system operational effectiveness.

Accordingly, the example steer assist system 24 utilizes braking forces in combination with a pivot axis spaced inboard of a wheel centerline 46 to generate moment forces about the vehicle center point and to change the steering angle 54 to improve the steering gain and enable greater vehicle control.

It is further understood that any of the above described concepts can be used alone or in combination with any or all of the other above described concepts. Although an example embodiment has been disclosed, a worker of ordinary skill in this art would recognize that certain modifications would come within the scope of this disclosure. For that reason, the following claims should be studied to determine the scope and content of this disclosure.

## Claims

1. A steering system for a vehicle comprising:
a front wheel supported for rotation about a first axis;
a pivot axis transverse to the first axis and spaced inboard of a centerline of the front wheel, wherein the front wheel is movable about the pivot axis to change direction of the vehicle;
a brake coupled to the front wheel for braking rotation of the front wheel;
a controller controlling operation of the brake to generate a desired braking force in a direction determined to adjust a vehicle direction.

2. The steering system as recited in claim 1, wherein the controller operates to apply a braking force to the front wheel that generates a desired force in a direction operable to change a direction of the vehicle.

3. The steering system as recited in claim 1 or 2, wherein the controller operates to apply a braking force to the front wheel to generate a moment about the pivot axis in a direction outboard of the vehicle.

4. The steering system as recited in claim 1, 2 or 3, including a primary steering system for guiding the vehicle that utilizes electric motors for rotating the front wheel about the pivot axis.

5. The steering system as recited in any preceding claim, wherein the controller is operable to control a direction of the vehicle without operator input.

6. A steering system as recited in any preceding claim comprising:
an electric motor coupled to the front wheel for rotating the front wheel about the pivot axis; and
a controller for controlling the brake to generate a braking force on the front wheel to generate a change in vehicle direction responsive to the electric motor failing to provide a desired control of the front wheel.

7. A steering system for a motor vehicle comprising:
a front wheel rotatable about an axis of rotation;
a pivot axis transverse to the axis of rotation, the pivot axis disposed inboard of a centerline of the front wheel;
an electric motor coupled to the front wheel for rotating the front wheel about the pivot axis;
a brake coupled to the front wheel for controlling rotation of the front wheel about the axis of rotation; and
a controller for controlling the brake to generate a braking force on the front wheel to generate a change in vehicle direction responsive to the electric motor failing to provide a desired control of the front wheel.

8. The steering system as recited in any preceding claim, wherein the pivot axis is disposed vehicle forward of the axis of rotation.

9. The steering system as recited in any preceding claim, wherein the braking force generates a first moment about a center point of the vehicle and a second moment about the pivot axis, wherein the first moment and the second moment are in a common direction.

10. A method steering a vehicle comprising the steps of:
supporting a front wheel for rotation about a first axis and pivotal movement about a pivot axis transverse to the first axis, wherein the pivot axis is disposed inboard of a centerline of the front wheel; and
generating a braking force on the front wheel to generate a desired first moment force about a center point of the vehicle and a second moment force on the front wheel about the pivot axis.

11. The method as recited in claim 10, including controlling the braking force on the front wheel with a controller.

12. The method as recited in claim 10 or 11, wherein the pivot axis is disposed vehicle forward of the first axis.

13. The method as recited in claim 10, 11 or 12, wherein the front wheel includes a left front wheel and a right front wheel and generating a braking force on the left front wheel to steer the vehicle left, and a generating a braking force on the right front wheel to steer the vehicle right.

14. The method as recited in claim 10, 11, 12 or 13, including generating a braking force on a rear wheel in addition to the front wheel to generate the desired first moment force.
